# NEW EUROPEAN PATENT SPECIFICATION

(11) **EP 3 820 326 B2**
(45) Date of publication and mention of the opposition decision: **28.10.2026**
(45) Mention of the grant of the patent: 20.04.2022
(21) Application number: 19707122.8
(22) Date of filing: 31.01.2019
(51) Int. Cl.: A45D 40/16, A45D 40/00

(54) **PROCESS FOR PRODUCING LIPSTICKS WITH SPECIAL TRIDIMENSIONAL SURFACE EFFECTS**
VERFAHREN ZUR HERSTELLUNG VON LIPPENSTIFTEN MIT BESONDEREN DREIDIMENSIONALEN OBERFLÄCHENEFFEKTEN
PROCÉDÉ DE PRODUCTION DE ROUGES À LÈVES À EFFETS DE SURFACE TRIDIMENSIONNELS PARTICULIERS

(30) Priority: 13.07.2018 IT 201800007184
(43) Date of publication of application: 19.05.2021
(73) Proprietor: Intercos S.p.A., 20123 Milano (IT)
(72) Inventor: LATTANZI, Giuseppe, 20826 Misinto (MB) (IT); LEONE, Fabio, 24040 Casirate d'Adda (BG) (IT)
(74) Representative: Mittler, Andrea
(86) International application number: PCT/IB2019/050793
(87) International publication number: WO 2020/012250

(56) References cited:
- JP-A- 2001 072 541
- KR-B1- 100 317 449
- KR-B1- 100 698 920
- US-A- 6 022 209
- US-A1- 2002 086 079
- US-A1- 2007 295 887

## Description

The present invention relates to a process for producing lipsticks with special tridimensional superficial effects.

The normal lipsticks, i.e. those intended to be coupled to an appropriate supporting base which can be axially moved within a casing, usually have a lateral surface which is free of any particular visual effect.

Lipstick users would instead appreciate the possibility of having a lipstick worked on the outside which, in addition to attracting their attention at the time of purchase, could confer a different, more original cosmetic effect, not just of coloring, to the user's lips.

US 6022209 A discloses a process for production of lipsticks with special tridimensional effects, which comprises the use of a molded hollow ogive of malleable plastic material which has an internal cavity shaped in a complementary way with respect with the tridimensional design wished for the surface of the lipstick. JP 2001072541 A describes a process to produce a lipstick having an improved appearance with mat and glossy portions, wherein two different process are described. In the first process, a die is polished to be a smooth surface, then is modified through sand blasting or shot peening or laser processing in order to get a mat portion; an ogive is then obtained from such die; the melted cosmetic material is then poured in said ogive attached to a lipstick container. In the second process, the internal surfaces of a lipstick mold are polished to be a smooth surface, then modified through sand blasting or shot peening or laser processing in order to get a mat portion; the melted cosmetic material is then poured in a mold body comprising two portions.

It is the object of the present invention to provide an improved process adapted to produce a lipstick with special tridimensional surface effects capable of resulting, on the user's lips, in a different, original and pleasant cosmetic effect, appreciated by the user and by the observer.

According to present invention, such an object is achieved by a process comprising the succession of steps recited in claim 1.:
A lipstick is thus obtained, which has an external lateral surface provided with any tridimensional design deriving from laser-working of the initial metal tap.

According to the process according to the present invention, the solidified lipstick extracted from the ogive is then subjected to a step of spraying small pearls, or pearling, which is performed inside a chamber by a cyclone system which, without using solvents or the like, allows a desired number of tiny pearls to adhere in a uniform manner, without leaving gaps or overdoses, to the external lateral surface of the lipstick to confer a particularly bright and pleasant appearance thereto.

The characteristics of the process according to the present invention and of the lipstick which may derive therefrom will become apparent from the following detailed description of exemplary embodiments.

In the drawings:
figures 1 and 2 show different side views of a rough tap which can be used to implement the process according to the present invention;
figures 3 and 4 show the same tap after an operation of polishing a head portion thereof intended to define the shape of a lipstick;
figures 5 and 6 show the same tap (or laser-worked tap) with laser-worked head part at the end of an operation of laser-working the head part thereof;
figure 7 shows an enlarged detail of the external lateral surface of the laser-worked head portion of the tap after the laser-working operation;
figure 8 shows a section view of a machine for molding a hollow ogive of malleable plastic material using a tap with laser-machined head part;
figure 9 shows the ogive after the extraction from the molding machine;
figure 10 shows an enlarged detail of the lateral surface of the internal cavity of the ogive after the extraction from the mold and the separation from the tap with laser-worked head part;
figure 11 shows a section view of a casting machine for forming a lipstick inside the cavity of the ogive;
figures 12 and 13 show different side views of the lipstick extracted from the ogive;
figure 14 shows a diagrammatic view of a cyclone machine in which a final pearling of the lipstick is performed;
figures 15 and 16 show different side views of the lipstick in figures 12 and 13 after the pearling operation;
figures 17-32 show different further side views of examples of lipsticks with shaped lateral surface without or with pearling; the lipsticks with shaped lateral surface without pearling not being part of the present invention.

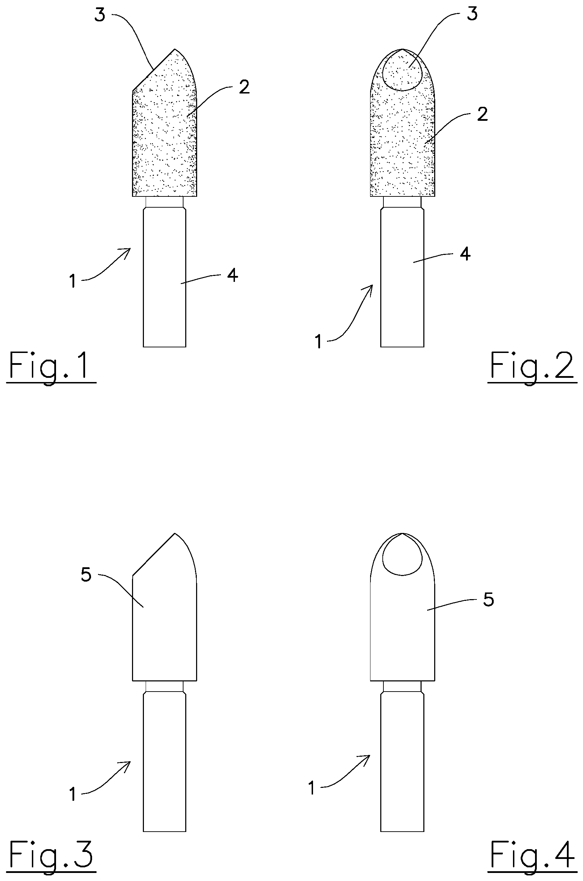

A metal tap 1 which can be used for the process according to the present invention is shown in figures 1 and 2, and comprises a head part 2, initially in rough state, which is shaped like a usual lipstick, i.e. has a cylindrical shape ending with a pointed end with oblique cut 3. A tang 4, which can be used to support and handle tap 1, axially extends from the base of head 2.

The process according to the present invention starts by mirror-polishing the head part 2, which is performed with any equipment of known type and allows obtaining a tap with polished head part 5, as shown in figures 3 and 4.

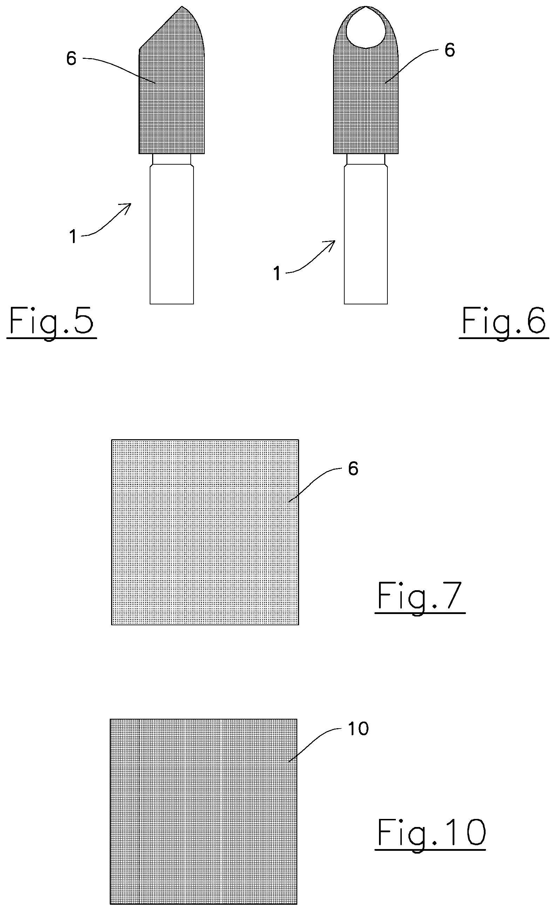

By using any equipment known *per se,* the polished head 5 of the tap is subjected to laser-working, which produces a laser-worked head 6, the external lateral surface of which has a desired tridimensional design, e.g. such as a velvet design or that of other fabric, as shown in figure 7.

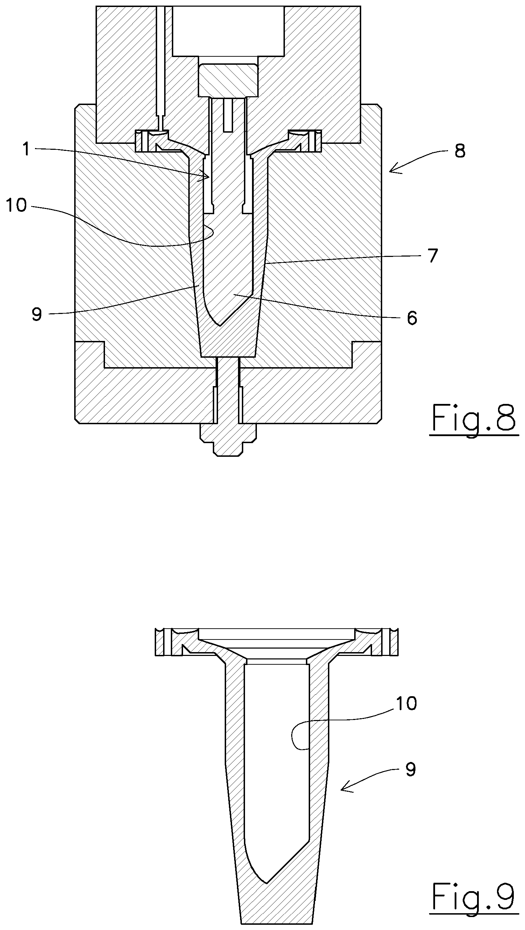

The tap with laser-worked head 6 is then used to obtain a hollow ogive 9 made of malleable plastic material (shown in figure 9) by introducing the tap with laser worked head 6 inside a molding cavity 7 of a molding machine 8 of known type (e.g. such as that described in EP 1 473 133 A1), shown in figure 8, to define a molding space 8 between the tap with laser-worked head 6 and the cavity 7.

By pouring a plastic fluid material into said working space 8 a hollow ogive 9 is obtained with an internal cavity 10, facing upwards, having a design, shown in the enlarged detail in figure 10, which is complementary to that of the external lateral surface of the laser-worked head 6.

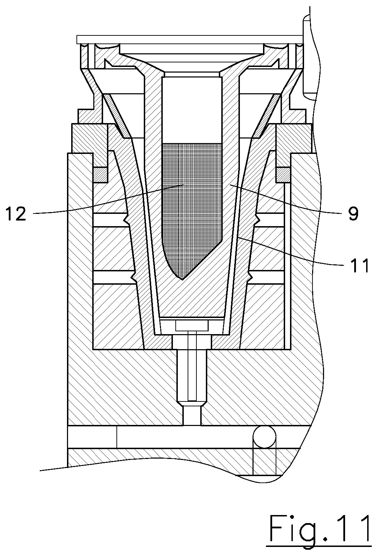

Once extracted from the molding machine, the hollow ogive 9 is inserted into a molding space 11 of a molding machine of any known type (e.g. such as that described in EP 1 437 062 A1), shown in figure 11, which receives by pouring a fluid product 12 adapted to form a lipstick.

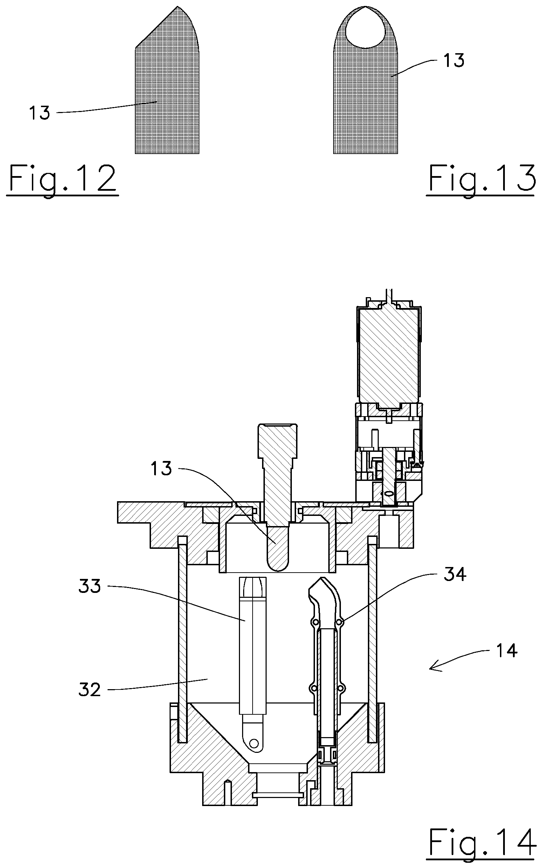

After the operations of cooling, solidifying and extracting from the internal cavity 10 of the ogive 9, a lipstick 13 is obtained, such as that shown in figures 12 and 13, which has an external lateral surface corresponding to that of the laser-worked head 6 of the tap in figures 5 and 6, in this example with velvet or other fabric type design.

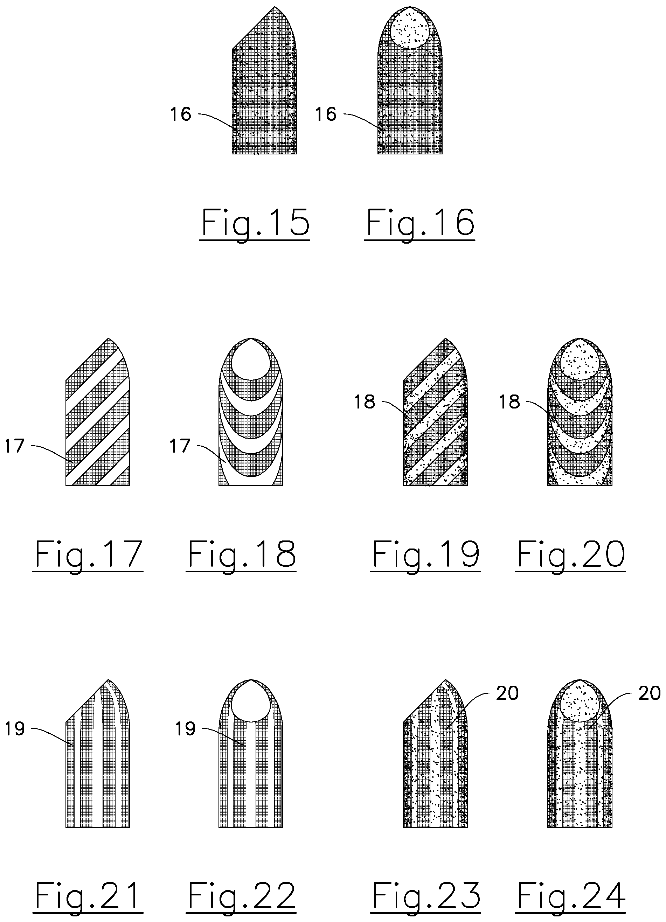

The lipstick 13 thus obtained is subjected to spraying of pearls, or "pearling", in a cyclone system, e.g. such as that diagrammatically shown and designated as a whole by reference numeral 14 in figure 14, where reference numeral 13 indicates a possible lipstick rotated inside a sealed chamber 31, reference numeral 32 indicates a spraying or pearling chamber, reference numerals 33 and 34 indicate the pearl dispensers 15 which make the pearls fluctuate peripherally to the lipstick 13; by virtue of a venturi effect inside the dispensers 33 and 34, the pearls in excess which do not stick to the lipstick fall inside the spraying chamber 32 to be then reintroduced for the next lipstick. So, the lipstick is coated with pearls 15 which stick thereto in a homogeneous manner without leaving gaps or excesses, and confer to the final lipstick 16, shown in figures 15 and 16, a super-iridescent effect, much more striking than otherwise obtainable by traditional pearl spraying mixed with solvents.

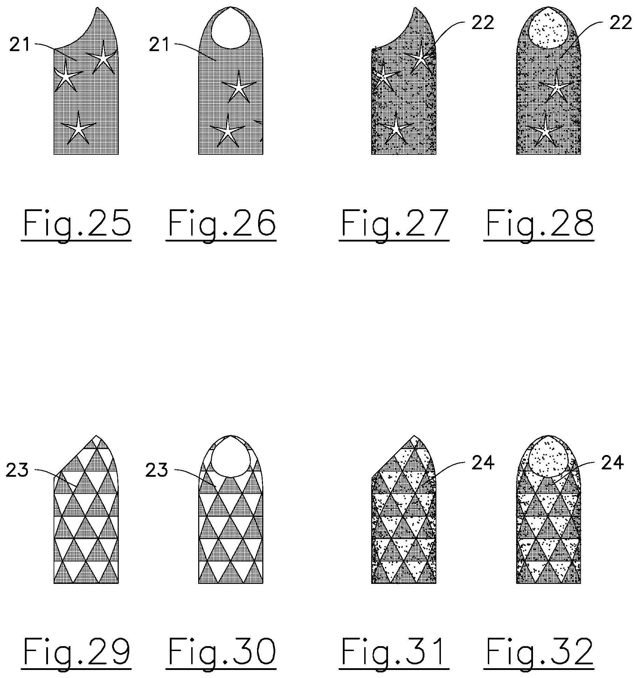

As explained above, the final lipstick with pearling, may have any other design according to the design drawn by laser-working the head part of the initial tap. Figures 17-32 show only a few examples of lipsticks without or with pearling. In particular, figures 17-18 show a lipstick 17 with oblique un-pearled strips and figures 19-20 show a similar lipstick with oblique strips 18 with pearls 15, figures 21-22 show a lipstick with vertical un-pearled strips 19, and figures 23-24 show a similar lipstick with vertical strips 20 with pearls 15, figures 25-26 show a lipstick with an un-pearled star design 21, and figures 27-28 show a similar lipstick with star design 22 with pearls 15, figures 29-30 show a lipstick 23 with light and dark un-pearled triangles, and figures 31-32 show a similar lipstick 24 with light and dark triangles with pearls 15; Figures 17, 18, 21, 22, 25, 26, 29, and 30 do not form part of the present invention.

## Claims

1. Process for production of lipsticks with special tridimensional superficial effects, comprising the following succession of steps:
a) forming a metallic tap (1) with a head part (2) shaped as a lipstick with a rough external lateral surface;
b) polishing of the external lateral surface of the head part (2) of said metallic tap (1) to obtain a head part with a polished external lateral surface (5);
c) laser working of the polished external lateral surface (5) of said head part (2) to obtain a tap with laser-worked head part (6) worked according a desired tridimensional design;
d) introducing said tap with laser-worked head (6) into an internal cavity of a molding machine to form a molding space (8) between said tap and said cavity (7):
e) forming by molding, inside said molding space (8), a hollow ogive (9) of malleable plastic material with an internal cavity (10) shaped in complementary way with respect to said tridimensional design;
wherein:
• polishing of the external lateral surface (5) of the head part (2) of the metallic tap (1) is a mirror-like polishing;
• the tridimensional design of the laser-worked head part (6) of the metallic tap (1) and of the lateral surface of the solidified lipstick (13) is a velvet-like design;
• after step e) the following further steps are carried out:
f) introduction of the ogive (9) with the shaped internal cavity (10) looking upwards into a molding space (11) of a molding machine;
g) pouring of hot fluid material (12) adapted for a lipstick into said shaped cavity (10) of the ogive (9);
h) cooling of the poured material (12) until obtaining a solidified lipstick (13);
i) drawing of the solidified lipstick (13) from the internal cavity (10) of the ogive (9);
j) final covering of the solidified lipstick (13) with small pearls (15) by means of a cyclone system (14) to obtain a pearled lipstick (13).

## Patentansprüche

1. Verfahren zur Herstellung von Lippenstiften mit speziellen dreidimensionalen Oberflächeneffekten, umfassend die folgende Abfolge von Schritten:
a) Bilden eines metallischen Zapfens (1) mit einem lippenstiftförmigen Kopfteil (2) mit einer rauen äußeren Seitenfläche;
b) Polieren der äußeren Seitenfläche des Kopfteils (2) des metallischen Zapfens (1), um ein Kopfteil mit einer polierten äußeren Seitenfläche (5) zu erhalten;
c) Laserbearbeiten der polierten äußeren Seitenfläche (5) des Kopfteils (2), um einen Zapfen mit laserbearbeitetem Kopfteil (6) zu erhalten, das entsprechend einer gewünschten dreidimensionalen Gestaltung bearbeitet ist;
d) Einbringen des Zapfens mit laser-bearbeitetem Kopf (6) in einen inneren Hohlraum einer Gussmaschine um einen Formraum (8) zwischen dem Zapfen und dem Hohlraum (7) zu bilden:
e) Bilden eines hohlen Spitzbogens (9) aus verformbarem Kunststoffmaterial mit einem inneren Hohlraum (10), der komplementär in Bezug auf die dreidimensionale Gestaltung geformt ist, durch Gießen innerhalb des Formraums (8);
wobei:
• Polieren der äußeren Seitenfläche (5) des Kopfteils (2) des metallischen Zapfens (1) ein spiegelblankes Polieren ist;
• die dreidimensionale Gestaltung des laser-bearbeiteten Kopfteils (6) des metallischen Zapfens (1) und der Seitenfläche des verfestigten Lippenstifts (13) eine samtartige Gestaltung ist;
• nach Schritt e) die folgenden weiteren Schritte durchgeführt werden:
f) Einführen des Spitzbogens (9) mit nach oben weisenden geformten inneren Hohlraum (10) in einen Gießraum (11) einer Gussmaschine;
g) Gießen von heißem fließfähigem Material (12), das für einen Lippenstift geeignet ist, in den geformten Hohlraum (10) des Spitzbogens (9);
h) Kühlen des gegossenen Materials (12), bis ein verfestigter Lippenstift (13) erhalten wird;
i) Abziehen des verfestigten Lippenstifts (13) aus dem inneren Hohlraum (10) des Spitzbogens (9);
j) abschließendes Bedecken des verfestigten Lippenstifts (13) mit kleinen Perlen (15) mittels eines Zyklonsystems (14), um einen Lippenstift mit Perlen (13) zu erhalten.

## Revendications

1. Procédé pour la production de rouges à lèvres avec des effets superficiels tridimensionnels spéciaux, comprenant la succession d'étapes suivantes :
a. formation d'un taraud métallique (1) avec une partie de tête (2) façonnée comme un rouge à lèvres avec une surface latérale externe rugueuse ;
b. polissage de la surface latérale externe (5) de la partie de tête (2) dudit taraud métallique (1) pour obtenir une partie de tête avec une surface latérale externe polie (5) ;
c. usinage au laser de la surface latérale externe polie (5) de ladite partie de tête (2) pour obtenir un taraud avec une partie de tête usinée au laser (6) usinée selon un modèle tridimensionnel souhaité ;
d. introduction dudit taraud avec tête usinée au laser (6) dans une cavité interne d'une machine de moulage pour former un espace de moulage entre ledit taraud et ladite cavité (7) :
e. formation par moulage, à l'intérieur dudit espace de moulage (8), d'une ogive creuse (9) de matériau plastique malléable avec une cavité interne (10) façonnée de manière complémentaire par rapport audit modèle tridimensionnel ;
dans lequel :
• le polissage de la surface latérale externe (5) de la partie de tête (2) dudit taraud métallique (1) est un polissage miroir ;
• le modèle tridimensionnel de la partie de tête usinée au laser (6) du taraud métallique (1) et de la surface latérale du rouge à lèvres solidifié (13) est un modèle de type velours ;
• après l'étape e) les étapes suivantes sont effectuées :
f. introduction de l'ogive (9) avec la cavité interne façonnée (10) regardant vers le haut dans un espace de versement (11) d'une machine de moulage;
g. versement de matériau fluide chaud (12) adapté pour un rouge à lèvres dans ladite cavité façonnée (10) de l'ogive (9) ;
h. refroidissement du matériau versé (12) jusqu'à obtention d'un rouge à lèvres solidifié (13) ;
i. retrait du rouge à lèvres solidifié (13) de la cavité interne (10) de l'ogive (9) ;
j. revêtement final dudit rouge à lèvres solidifié (13) avec de petites perles (15) par un système à cyclone (14) pour obtenir un rouge à lèvres perlé (13).
